# EUROPÄISCHE PATENTSCHRIFT

(11) **EP 3 016 872 B1**
(45) Veröffentlichungstag und Bekanntmachung des Hinweises auf die Patenterteilung: **03.04.2024**
(21) Anmeldenummer: 14736353.5
(22) Anmeldetag: 01.07.2014
(51) Int. Cl.: B65D 41/04, B65D 53/04, C12H 1/056

(54) **DICHTSCHEIBE FÜR EINE VERSCHLUSSKAPPE FÜR BEHÄLTNISSE, INSBESONDERE FLASCHEN**
SEALING DISK FOR A CLOSURE CAP FOR CONTAINERS, ESPECIALLY BOTTLES
DISQUE D'ÉTANCHÉITÉ POUR UN BOUCHON DE CONTENANTS, NOTAMMENT DE BOUTEILLES

(30) Priorität: 03.07.2013 DE 102013106966
(43) Veröffentlichungstag der Anmeldung: 11.05.2016
(73) Patentinhaber: Alfelder Kunststoffwerke Herm. Meyer GmbH, 31061 Alfeld/Leine (DE)
(72) Erfinder: KRÖGER, Rainer, 31319 Sehnde (DE); ROHRKA, Heinz-Werner, 65366 Geisenheim (DE); ROTHWEILER, Peter, 31084 Freden an der Leine (DE)
(74) Vertreter: Ahrens, Gabriele
(86) Internationale Anmeldenummer: PCT/EP2014/063965
(87) Internationale Veröffentlichungsnummer: WO 2015/000901

(56) Entgegenhaltungen:
- EP-A1- 0 803 445
- EP-A1- 1 852 176
- DE-A1- 19 547 761
- GB-A- 451 162
- GB-A- 732 543
- US-A- 2 020 776
- US-A- 4 935 273
- Schneider, Volker [DE]: "Differenzierung, Reaktions-vermögen und Behandlung von Böcksern", , 4. Mai 2012 (2012-05-04), XP002728864, Gefunden im Internet: URL:http://www.der-winzer.at/?+Differenzie rung,+Reaktions+vermoegen+und+Behandlung+v on+Boecksern+&id=2500%2C5116013%2C%2C%2CY2 Q9NzM%3D [gefunden am 2014-08-25]

## Beschreibung

Die vorliegende Erfindung betrifft eine Dichtscheibe für eine Verschlusskappe für Behältnisse, wie zum Beispiel Flaschenverschlüsse, die insbesondere für Flaschen geeignet ist, die mit vergorenen Säften aus Obst oder Trauben wie Fruchtweinen oder Weinen, gefüllt sind.

Insbesondere betrifft die vorliegende Erfindung eine Dichtscheibe mit der so genannte Böckser abgefangen werden können.

Böckser sind Geruchsfehler in mit Hefe vergorenen Getränken, insbesondere in Weinen, die je nach Entwicklungsstadium an faule Eier, verbrannten Gummi, verbrannte Zwiebeln, Schweiß oder Ähnliches erinnern.

Die Ursache für die Entstehung von Böcksern ist die Bildung von Thiolen durch die Hefe im Verlauf des Gärungsprozesses. Die zunächst gebildeten Thiole reagieren mit anderen Inhaltsstoffen der Getränke zu immer komplexeren Schwefelverbindungen, die alle geruchlich aktiv sind.

Es versteht sich, dass derartige üble Gerüche insbesondere in Weinen stören.

Es sind eine Reihe von Maßnahmen entwickelt worden, um Böckser aus Weinen zu beseitigen. Weit verbreitet ist der Zusatz von lebensmittelverträglichen Kupfersalzen, zum Beispiel Kupfersulfat, da die Kupferionen die Schwefelverbindungen zu binden vermögen. Diese Maßnahmen lassen sich aber nur vor der Abfüllung in Flaschen durchführen.

Nicht selten bildet sich der Böckser nach einer erfolgreichen Behandlung jedoch neu oder entsteht erstmalig nach Abfüllung in Flaschen. Für das Auftreten in diesen späten Stadien sind Thioessigsäureester verantwortlich, die selbst geruchlich inaktiv sind. Im Verlauf der Lagerung bilden sich aus den Thioessigsäureestern in einer Reaktionskette weitere Substanzen, die zunehmend höhere Geruchsintensitäten aufweisen.

Die späten Böckser verursachenden Thioessigsäureester reagieren nicht mit Kupferionen. Sie stellen eine zunächst versteckte Vorläuferstufe dar, die sich nicht durch eine Behandlung mit Kupfersalzen präventiv entfernen lässt. Auch Weine, die bereits einmal mit Kupfersalzen behandelt worden sind, sind daher nicht gegen das erneute Entstehen solcher Böckser geschützt. Der wirtschaftliche Schaden, der durch auf der Flasche entstehende Böckser in zum Teil prämierten Weinen entsteht, ist erheblich.

US 2,020,776 betrifft eine Einlage für einen Flaschenverschluss mit einer Trägerschicht, wobei auf einer Seite der Trägerschicht geschmolzenes Metall aufgesprüht ist und die andere Seite einen Klebstoff aufweist. Zweck dieser Einlage ist, die Entwicklung von Geschmäckern und Kontaminationen zu verhindern sowie möglichen störenden chemischen Reaktionen und Entfärbungen vorzubeugen.

Als wesentlicher Vorteil der aufgesprühten Metallschicht wird angesehen, dass diese fest haftend, fest zusammenhängend und unempfindlich gegen Knicke und Risse ist, sowie undurchlässig für Gas und Feuchtigkeit ist; das heißt ein Eindringen von Gas wie Luftsauerstoff und Feuchtigkeit von außen verhindert wird. Ein Hinweis auf die Bindung von Schwefelverbindungen um insbesondere die Bildung von Böckser zu verhindern, findet sich jedoch nicht. Auch findet sich kein Hinweis auf der Seite der Schicht mit aktiver Substanz, die dem Behälterinhalt zuzuwenden ist, eine Beschichtung vorzusehen, die gasdurchlässig ist.

In der Publikation "Der Winzer" wird auf Seite 5, im 4. Absatz eine Zinn-Saran-Einlage für Schraubverschlüsse beschrieben, die als Sauerstoffbarriere wirkt. Es wird ausgeführt, dass diese Zinn-Saran-Einlage eine äußerst geringe Sauerstoffpenetrationsrate aufweist. Wie aus dem vorhergehenden Absatz hervorgeht, läuft die Böckserbildung insbesondere unter weitgehendem Sauerstoffabschluss und sehr reduktiven Bedingungen ab. Dies soll offensichtlich durch die Zinn-Saran-Einlage verhindert werden.

Saran ist eine Handelsbezeichnung für Polyvinylidinchlorid, das für seine ausgezeichnete Barierreeigenschaft für Sauerstoff bekannt ist.

GB 451,162 A1 beschreibt eine Dichtscheibe für Getränkeflaschen als Ersatz für bekannte Dichtscheiben aus Kork. Ziel war es, die Nachteile von Dichtscheiben aus Kork zu beseitigen wie Variation und unregelmäßige Porosität, unterschiedliche Kompressibilität und Elastizität sowie unzureichende Dichtungseigenschaften. Die Dichtscheibe wird aus einem Material auf Basis von tierischem Gewebe gefertigt. Dieses Material auf Basis von tierischem Gewebe kann zusätzliches Material enthalten, wie ein Metall, zum Beispiel Kupfer und Zink. Ein Hinweis auf die Beseitigung von störenden Substanzen, insbesondere von Böckser verursachenden Schwefelverbindungen findet sich jedoch nicht.

US-Patent 4,935,273 beschreibt eine Dichtscheibe für Flaschenverschlüsse, die mit einer speziellen, durch Druck aktivierbaren untersten Klebstoffschicht ausgestattet ist, mit der Flaschenverschlüsse haftend auf einer Flaschenöffnung aufgebracht werden können.

Als weitere Schichten kann die Dichtscheibe von oben nach unten in Richtung Flaschenöffnung gesehen, eine Deckschicht aus einem Schaumstoff, eine weitere Klebstoffschicht, die von der untersten Klebstoffschicht verschieden ist, sowie eine Schicht aus Papier oder einem Polymermaterial wie Polyethylenterephthalat, Polyvinylidenchlorid und Polycarbonat, die gegebenenfalls auch mit einem Metall beschichtet sein kann, aufweisen. Gegenstand dieses US-Patentes ist die durch Druck aktivierbare, unterste Klebstoffschicht zum haftenden Aufbringen auf eine Flaschenöffnung. Einen Hinweis auf die Böckser-Problematik findet sich nicht.

Es bestand daher ein Bedarf, nach einer Maßnahme, mit der Böckser auch in Weinen, die bereits in Flaschen abgefüllt sind, beseitigt werden können.

Es versteht sich, dass eine derartige Maßnahme nicht auf Weine beschränkt ist, sondern gleichermaßen für andere Getränke geeignet ist, die zur Böckserbildung neigen, wie zum Beispiel Fruchtweine, Destillate etc.

Erfindungsgemäß wird diese Aufgabe gelöst durch eine Dichtscheibe für Verschlusskappen von Behältnissen, insbesondere Flaschen, in welche von Böckser gefährdete Getränke abgefüllt werden, wobei in die Dichtscheibe eine aktive Substanz inkorporiert ist, die die Schwefelverbindungen, die den Böckser verursachen, binden können.

Entsprechend betrifft die Erfindung eine Dichtscheibe zum Einlegen in eine Verschlusskappe für Behältnisse, insbesondere für Flaschenverschlüsse für mit Hefe vergorene Flüssigkeiten, wobei die Dichtscheibe als Deckschicht eine Schicht aus Polymerschaumstoff und eine aktive Schicht mit einer aktiven Substanz aufweist, die Schwefelverbindungen bindet, wobei i) die aktive Schicht aus der aktiven Substanz gebildet ist, und auf eine Kunststofffolie aufgebracht ist, oder ii) die aktive Substanz in die Kunststofffolie eingearbeitet ist, wobei die Kunststofffolie aus mindestens einem Polymer ausgewählt unter Ethylenhomopolymeren, linearen Co-Polymeren von Ethylen mit einem oder mehreren α-Olefinen mit drei bis vierzehn Kohlenstoffatomen, Polypropylen, ungerecktem Polypropylen, orientiertem Polypropylen, Polyamid, oder orientiertem Polyamid hergestellt ist.

Die Böckser verursachenden Schwefelverbindungen sind flüchtige Substanzen. Sie steigen in der Flasche nach oben und sammeln sich in dem Hohlraum zwischen Flüssigkeitsspiegel und Verschluss an. Von dort kommen sie mit der Dichtscheibe in der Verschlusskappe in Kontakt und diffundieren in diese. Dabei kommen sie in Kontakt mit der aktiven Substanz, die in der Dichtscheibe enthalten ist, und werden von der aktiven Substanz neutralisiert.

Dichtscheiben für Verschlusskappen für Behältnisse, wie Flaschen haben typischerweise einen Laminataufbau mit Schichten aus in der Regel unterschiedlichen Materialien, die in der Dichtscheibe unterschiedliche Funktionen erfüllen. Die Dichtscheiben werden in die Verschlusskappen, wie zum Beispiel Schraubverschlüsse, für die Flaschen eingefügt und weisen einen hierfür geeigneten Durchmesser auf.

Die Verschlusskappen können aus Metall, häufig Aluminium, oder Kunststoff gefertigt sein.

Die Dichtscheiben dienen dazu, Flüssigkeitsdurchtritt zu verhindern. Weiter sind Dichtscheiben bekannt, die verhindern, dass Gas, insbesondere Luftsauerstoff, von außen in das Flascheninnere eindringen kann und die Qualität der Getränke beeinträchtigt.

Die erfindungsgemäße Dichtscheibe kann eine Verbundfolie sein, die zwei oder mehr Schichten aufweist. Je nach Bedarf können die Schichten aus verschiedenen Materialien gebildet sein. Sie können aus Kunststoff, Metall, Schaumstoff, Papier und gegebenenfalls weiteren Materialien hergestellt sein.

Die Dichtscheibe enthält mindestens eine aktive Schicht mit einer aktiven Substanz zur Bindung oder Neutralisation der Böckser verursachenden Schwefelverbindungen.

Die Herstellung von Dichtscheiben, die aus einer Verbundfolie aufgebaut sind, ist an sich bekannt.

So können die einzelnen Lagen durch Kaschierung, je nach Bedarf mit Hilfe von Klebstoffen auf lösungsmittelhaltiger, lösungsmittelfreier oder wässriger Basis, oder durch eine Extrusionskaschierung, zum Beispiel mit Haftvermittlern, zur Verbundfolie zusammengefügt werden.

Die aktive Substanz kann ein Metall, eine Metalllegierung, ein Metallsalz, Metalloxid oder Metallhydroxid oder Mischungen davon sein, die mit der Schwefelverbindung beziehungsweise Schwefelverbindungen reagiert/reagieren. Beispiele hierfür sind Kupfer, Zinn, Silber, Gold, Antimon, Legierungen davon, deren Salze, einschließlich der Oxide und Hydroxide. Die Art der Reaktion ist unerheblich, solange die Schwefelverbindung beziehungsweise Schwefelverbindungen in eine Form überführt werden, in der der üble Geruch, der den Böckser charakterisiert, beseitigt beziehungsweise verhindert wird.

Vorzugsweise ist die aktive Substanz gesundheitlich unbedenklich und physiologisch verträglich.

Die aktive Substanz kann in eine oder mehrere der Schichten eingebracht werden, aus der die Verbundfolie aufgebaut ist.

Die aktive Substanz kann selbst in Form von einer oder mehreren Schichten vorliegen.

Beispielsweise kann die aktive Substanz als Schicht auf eine Kunststofffolie aufgebracht oder eingearbeitet sein. Die Kunststofffolie mit der aktiven Substanz oder aktiver Schicht kann eine Verbundfolie aus zwei oder mehr Schichten sein, die auch aus verschiedenen Polymeren bestehen können.

Geeignete Polymere für die Kunststofffolie mit aktiver Substanz sind Ethylenhomopolymere wie zum Beispiel LDPE (Low Density Polyethylene) und HDPE (High Density Polyethylene) oder lineare Copolymere von Ethylen mit einem oder mehreren α-Olefin mit zum Beispiel 3 bis 14 Kohlenstoffatomen wie zum Beispiel 1-Buten, 1-Hexen, 1-Okten und 4-Methyl-1-Penten. Beispiele für geeignete Copolymere sind LLDPE (Linear Low Density Polyethylene) und MDPE (Medium Density Polyethylene) sowie VLDPE (Very Low Density Polyethylene). Weitere geeignete Polymere sind Polypropylen, ungerecktes Polypropylen (CPP, Cast Polypropylene), orientiertes Polypropylen (OPP, Oriented Polypropylene), Polyamid oder orientiertes Polyamid (OPA, Oriented Polyamide).

Die einzelnen Schichten der Kunststofffolie mit der aktiven Substanz haben üblicherweise Dicken zwischen 8 und 200 µm.

Wird als aktive Substanz eine Metallschicht eingesetzt, kann diese zum Beispiel mittels herkömmlicher Sputter- oder Metallisierungsverfahren auf die Kunststofffolie aufgebracht werden. Sie kann auch in Form einer metallhaltigen Druckfarbe auf die Kunststofffolie aufgetragen werden. Diese Schicht aus aktiver Substanz hat üblicherweise eine Dicke von 0,5 bis 30 µm.

Die aktive Substanz kann auch in Form von Metallpartikeln in die Kunststofffolie eingebracht sein.

Als weitere Schicht enthält die erfindungsgemäße Dichtscheibe vorzugsweise eine sauerstoffundurchlässige Schicht oder Gasbarriereschicht.

Die sauerstoffundurchlässige Schicht erfüllt eine Doppelfunktion. Zum Einen verhindert sie das Eintreten von Sauerstoff oder sonstigen Gasen in das Flascheninnere. Zum Anderen hindert sie gasförmige Bestandteile, wie beispielsweise Alkohol, am Durchtreten vom Flascheninneren nach außen durch die Dichtscheibe hindurch. Das ist einerseits von Nachteil, da auch die flüchtigen Böckser verursachenden Schwefelverbindungen zurückgehalten werden. Jedoch sollte der Zutritt von Sauerstoff verhindert werden, da dieser zu einer erheblichen Verminderung der Qualität des Weines führen kann.

Die sauerstoffundurchlässige Schicht kann eine Metallfolie sein, beispielsweise aus Zinn, Kupfer oder Aluminium. Sie kann aus einem Kunststoffmaterial mit Gasbarriereeigenschaften hergestellt sein. Beispiele hierfür sind Kunststofffolien auf Basis von Polyvinylidenchlorid oder Ethylen-Vinylalkohol-Copolymer (EVOH).

Damit der Kontakt der Schwefelverbindungen mit der aktiven Substanz nicht behindert wird, sollte die Gasbarriereschicht in der Dichtscheibe auf der Seite der Schicht mit aktiver Substanz vorgesehen werden, die vom Flascheninneren abgewandt ist, wenn die Dichtscheibe in eine Verschlusskappe eingelegt ist.

Gemäß einer Ausgestaltung kann die Schicht mit der aktiven Substanz gleichzeitig als sauerstoffundurchlässige Schicht wirken. Beispielsweise wenn sie eine Schicht aus einem Material ist, das erfindungsgemäß als aktive Substanz, die Schwefelverbindungen bindet, wirkt und zudem Sauerstoffundurchlässig ist. Ein Beispiel ist Kupfer.

Die Dichtscheibe weist zudem eine weitere Schicht aus einem Polymerschaumstoff auf. Der Polymerschaumstoff kann Polyethylenschaumstoff oder Polypropylenschaumstoff sein. Die Schicht aus Schaumstoff bildet üblicherweise die oberste Schicht, das heißt Deckschicht, des Schichtenaufbaus der Dichtscheibe und hat in der Regel eine stärkere Dicke als eine der übrigen Schichten. Die Dichtscheibe wird auf der Seite ihrer obersten Schicht aus Schaumstoff vorteilhaft von einer Verschlusskappe oder einem Schraubverschluss abgedeckt.

Die Dichtscheibe kann entweder vor dem Verschließen des Verschlusses, zum Beispiel vor dem Zudrehen eines Schraubverschlusses, in die Verschlusskappe eingelegt oder in sonstiger Weise auf dem Behältnisrand befestigt werden. Beispielsweise kann sie auch zunächst auf eine Flaschenhalsöffnung aufgelegt und der Verschluss anschließend darüber gestülpt werden. Durch das Verschließen, wie Zudrehen, Anrollen oder sonstiges Befestigen des Verschlusses auf dem Flaschenhals wird zugleich eine Belastung als Druckbelastung aufgebracht. Dadurch wird die Dichtscheibe auf eine geringere Dicke zusammengepresst.

Die Schaumstoffschicht sorgt durch Kompressionskraft für den entsprechenden Klemmdruck und dadurch für eine Abdichtung.

Durch die Dicke der Schaumstoffschicht und deren elastische Gestaltung lassen sich Toleranzen der Verschlüsse und Flaschenhälse ausgleichen. So wird beispielsweise auch jede Flüssigkeit (auch in Dampfform), die von außen in die Flasche eindringen könnte, am Eindringen gehindert. Zudem verleiht die Schaumstoffschicht der Dichtscheibe aufgrund ihrer größeren Dicke im Vergleich zu den anderen Schichten Stabilität und eine besonders gute Handhabbarkeit.

Zusätzlich zu den bereits aufgeführten Schichten können weitere Schichten vorgesehen sein. Dies können aktive Schichten sein, die die Haltbarkeit des Getränks verlängern oder dessen Zustand erhalten oder sogar verbessern.

Vorteilhaft für mit Sauerstoff reagierende Getränke, wie zum Beispiel Weine, sind Dichtscheiben, die das Getränk vom im Behälter mit eingeschlossenem Sauerstoff schützen können. Hierzu kann als weitere aktive Schicht eine sauerstoffabsorbierende Schicht vorgesehen sein.

Bei Bedarf kann auch eine Papierschicht vorgesehen sein. Eine Papierschicht zwischen Schaumstoffschicht und darunterliegender Schicht verbessert die Haftung zwischen diesen Schichten und erhöht die Dichtung.

Nachstehend wird die Erfindung anhand von Beispielen für erfindungsgemäße Dichtscheiben - teilweise unter Verweis auf die anliegenden Figuren - näher erläutert werden. In den Beispielen ist der Schichtaufbau von oben nach unten (in Richtung Flascheninneres) beschrieben.

### 1. Beispiel:

Die Dichtscheibe ist von oben nach unten aus einer ersten Schicht aus Schaumstoff, einer zweiten Schicht aus Papier, einer Gasbarriereschicht als dritter Schicht sowie einer Polymerfolie mit aktiver Schicht aufgebaut.

Die einzelnen Schichten können durch Kleberschichten miteinander verbunden sein, wie sie für die Herstellung von derartigen Schichtlaminaten üblich sind.

Die erste Schicht aus Schaumstoff kann aus Polyethylen- oder Polypropylenschaumstoff mit einer Dichte von 80 bis 500 g/m³ und einer Dicke von 0,2 bis 4 mm ausgebildet sein.

Unterhalb der ersten Schicht ist eine zweite Schicht aus Papier, zum Beispiel Papier mit 60 g, vorgesehen.

Unterhalb der Papierschicht ist eine Gasbarriereschicht angeordnet. Die Gasbarriereschicht kann eine Metallfolie z. B. aus Zinn, Aluminium oder Kupfer oder ein gasundurchlässiger Kunststoff, wie zum Beispiel auf Basis von Polyvinylidenchlorid sein. Die Dicke der Gasbarriereschicht liegt beispielsweise bei 10 bis 30 µm. Diese vergleichsweise geringe Dicke der Gasbarriereschicht reicht zum Entfalten der Sperrwirkung insbesondere gegen den Eintritt von gasförmigen Sauerstoff und für den gasförmigen Alkohol aus.

Darunter ist eine Polymerfolie mit einer aktiven Schicht vorgesehen. Die aktive Schicht ist aus einer aktiven Substanz gebildet, die mit den Böckser verursachenden Schwefelverbindungen reagiert und diese auf diese Weise aus dem Flascheninneren entfernt, wodurch der typische üble Böcksergeruch verschwindet. In diesem Beispiel ist die aktive Schicht aus Kupfer gebildet. Das Kupfer ist auf einer Polyethylenfolie aufgebracht. Die Polyethylenfolie bildet die unterste Lage dieser Ausführungsform einer erfindungsgemäßen Dichtscheibe.

### 2. Beispiel:

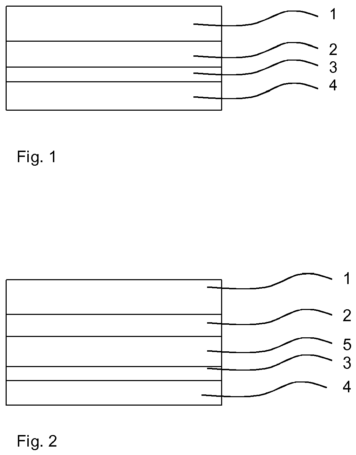

Figur 1 zeigt den Schichtaufbau einer Ausführungsform einer erfindungsgemäßen Dichtscheibe mit einer obersten Schicht 1 aus Polyethylenschaumstoff mit einer Dicke von 1,9 mm und einer Dichte von 250 kg/m³, einer Schicht 2 aus Papier mit 60 g/m², einer aktiven Schicht 3, die unterhalb der Papierschicht 2 angeordnet ist und aus Zinn beziehungsweise Kupfer besteht und eine Dicke von 20 µm hat, sowie einer Schicht 4 aus Polyethylenfolie mit einer Dicke von 50 µm, die die unterste Schicht des Schichtaufbaus bildet, das heißt die Schicht, die unmittelbar in Richtung Flascheninneres zeigt.

Insbesondere, wenn die aktive Schicht 3 aus Kupfer ausgebildet ist, kann sie zugleich die Funktion einer Sauerstoffsperrschicht erfüllen.

### 3. Beispiel:

Figur 2 zeigt eine weitere Ausführungsform für einen Schichtaufbau einer erfindungsgemäßen Dichtscheibe.

Auch hier ist die oberste Schicht 1 aus Polyethylenschaumstoff mit einer Dichte von 250 kg/m³ ausgebildet und hat eine Dicke von 1,9 mm. Darunter ist eine Papierschicht 2 aus Papier mit 60 g/m² angeordnet. Die darunter liegende Schicht 3 ist eine Sauerstoffsperrschicht aus Aluminium mit einer Dicke von 15 µm. Als aktive Schicht wirkt hier ein Verbund aus Kupferlack 3, der auf einer Polyethylenfolie 4 aufgebracht ist, wobei die Polyethylenfolie eine Dicke von 50 µm hat und der Kupferlack in einer Menge von 3 g/m² aufgetragen ist.

Es ist anzumerken, dass in den Figuren 1 und 2 die Schichtdicken nicht maßstabsgetreu wiedergegeben sind.

Alle Schichten überziehen vollflächig die Unterseite der darüber angeordneten Schicht.

Die Dichtscheibe wird entweder vorab in eine vorgefertigte Verschlusskappe eingefügt und darin befestigt und eingeklemmt. Die Schichten der Dichtscheibe haften dabei bereits aufeinander. Beim Anrollvorhang oder sonstigem Befestigen der Verschlusskappe auf dem Flaschenhals wird diese zusätzlich belastet. Die in dem Verschluss liegende Dichtscheibe wird dabei zusammengepresst. Das Flascheninnere wird dadurch luftdicht mittels der Dichtscheibe und der Verschlusskappe verschlossen.

Die Dichtscheiben sind nicht nur für Verschlüsse für Weinflaschen oder andere alkoholische Getränke verwendbar, sondern überall dort von Vorteil, wo in einem Behälterinneren Schwefelverbindungen gebildet werden, die einem Böckser entsprechen.

## Patentansprüche

1. Dichtscheibe zum Einlegen in eine Verschlusskappe für Behältnisse, insbesondere für Flaschenverschlüsse für mit Hefe vergorene Flüssigkeiten, wobei die Dichtscheibe als Deckschicht (1) eine Schicht aus Polymerschaumstoff aufweist, **dadurch gekennzeichnet, dass** die Dichtscheibe eine aktive Schicht mit einer aktiven Substanz (3) aufweist, die Schwefelverbindungen bindet, wobei i) die aktive Schicht aus der aktiven Substanz gebildet ist, und auf eine Kunststofffolie (4) aufgebracht ist, oder ii) die aktive Substanz in die Kunststofffolie (4) eingearbeitet ist, wobei die Kunststofffolie aus mindestens einem Polymer ausgewählt unter Ethylenhomopolymeren, linearen Copolymeren von Ethylen mit einem oder mehreren α-Olefinen mit 3 bis 14 Kohlenstoffatomen, Polypropylen, ungerecktem Polypropylen, orientiertem Polypropylen, Polyamid, und orientiertem Polyamid hergestellt ist.

2. Dichtscheibe nach Anspruch 1,
**dadurch gekennzeichnet,**
**dass** die aktive Substanz ein Metall ausgewählt unter Kupfer, Zinn, Silber, Gold, Antimon, Legierungen davon, Salzen davon einschließlich der Oxide und Hydroxide ist.

3. Dichtscheibe nach einem der Ansprüche 1 oder 2,
**dadurch gekennzeichnet,**
**dass** die Kunststofffolie (4) eine Verbundfolie aus zwei oder mehr Polymerschichten ist.

4. Dichtscheibe nach Anspruch 3,
**dadurch gekennzeichnet,**
**dass** die Verbundfolie mindestens eine aktive Schicht (3) enthält, die aus der aktiven Substanz gebildet ist.

5. Dichtscheibe nach einem der vorhergehenden Ansprüche,
**dadurch gekennzeichnet,**
**dass** zusätzlich eine sauerstoffundurchlässige Schicht (5) vorgesehen ist, die in der Dichtscheibe auf der Seite der aktiven Schicht mit der aktiven Substanz (3) angeordnet ist, die der Deckschicht (1) zugewandt ist.

6. Dichtscheibe nach einem der vorhergehenden Ansprüche,
**wobei** die aktive Schicht mit aktiver Substanz (3) als metallhaltige Druckfarbe auf die Kunststofffolie (4) aufgetragen ist.

7. Verwendung einer Dichtscheibe nach einem der vorhergehenden Ansprüche für einen Flaschenverschluss für eine Flasche.

8. Verwendung nach Anspruch 7,
**wobei** die Flasche eine Weinflasche ist.

## Claims

1. Sealing disc for insertion into a closure cap for containers, especially for bottle closures for liquids fermented with yeast, **wherein** the sealing disc comprises a layer of polymer foam as a cover layer (1),
**characterized in**
**that** the sealing disc comprises an active layer with an active substance (3) which binds sulphur compounds, wherein i) the active layer is formed from the active substance and is applied to a plastic film (4), or ii) the active substance is incorporated into the plastic film (4), wherein the plastic film is made of at least one polymer selected from ethylene homopolymers, linear copolymers of ethylene with one or more α-olefins having 3 to 14 carbon atoms, polypropylene, unstretched polypropylene, oriented polypropylene, polyamide, and oriented polyamide.

2. Sealing disc according to claim 1,
**characterized in**
**that** the active substance is a metal selected from copper, tin, silver, gold, antimony, alloys thereof, salts thereof including oxides and hydroxides.

3. Sealing disc according to one of claims 1 or 2,
**characterized in**
**that** the plastic film (4) is a composite film of two or more polymer layers.

4. Sealing disc according to claim 3,
**characterized in**
**that** the composite film comprises at least one active layer (3) formed from the active substance.

5. Sealing disc according to one of the preceding claims,
**characterized in**
**that** an oxygen-impermeable layer (5) is additionally provided, which is arranged in the sealing disc on the side of the active layer with the active substance (3) facing the cover layer (1).

6. Sealing disc according to one of the preceding claims,
**wherein** the active layer with the active substance (3) is applied to the plastic film (4) as a metal-containing printing ink.

7. Use of a sealing disc according to one of the preceding claims for a bottle closure for a bottle.

8. Use according to claim 7,
**wherein** the bottle is a wine bottle.

## Revendications

1. Disque d'étanchéité destiné à être placé dans un capuchon de fermeture pour des récipients, en particulier pour des fermetures de bouteilles pour des liquides fermentés avec de la levure, le disque d'étanchéité présentant, comme couche de recouvrement (1), une couche en matériau polymère, **caractérisé en ce que** le disque d'étanchéité présente une couche active comportant une substance active (3), qui lie les composés soufrés, i) la couche active étant formée par la substance active et appliquée sur une feuille en matériau synthétique (4), ou ii) la substance active étant incorporée dans la feuille en matériau synthétique (4), la feuille en matériau synthétique étant fabriquée à partir d'au moins un polymère choisi parmi les homopolymères d'éthylène, les copolymères linéaires d'éthylène avec une ou plusieurs α-oléfines comprenant 3 à 14 atomes de carbone, le polypropylène, le polypropylène non étiré, le polypropylène orienté, le polyamide et le polyamide orienté.

2. Disque d'étanchéité selon la revendication 1, **caractérisé en ce que** la substance active est un métal choisi parmi le cuivre, l'étain, l'argent, l'or, l'antimoine, leurs alliages, leurs sels, y compris des oxydes et hydroxydes.

3. Disque d'étanchéité selon l'une des revendications 1 ou 2, **caractérisé en ce que** la feuille en matériau synthétique (4) est une feuille composite en deux couches polymères ou plus.

4. Disque d'étanchéité selon la revendication 3, **caractérisé en ce que** la feuille composite contient au moins une couche active (3) qui est formée à partir de la substance active.

5. Disque d'étanchéité selon l'une des revendications précédentes, **caractérisé en ce qu'**une couche (5) imperméable à l'oxygène est en outre prévue, qui est agencée dans le disque d'étanchéité sur le côté de la couche active comportant la substance active (3) qui est orienté vers la couche de recouvrement (1).

6. Disque d'étanchéité selon l'une des revendications précédentes, la couche active comportant la substance active (3) étant appliquée comme encre d'impression métallique sur la feuille en matériau synthétique (4).

7. Utilisation d'un disque d'étanchéité selon l'une des revendications précédentes pour une fermeture de bouteille pour une bouteille.

8. Utilisation selon la revendication 7, la bouteille étant une bouteille de vin.
